# EUROPÄISCHE PATENTANMELDUNG

(11) **EP 1 826 458 A1**
(43) Veröffentlichungstag der Anmeldung: **29.08.2007**
(21) Anmeldenummer: 06004041.7
(22) Anmeldetag: 28.02.2006
(51) Int. Cl.: F16H 25/20, F16D 3/04

(54) **Lineare Stellantriebsvorrichtung**

(71) Anmelder: Inelta Sensorsysteme GmbH & Co., 85521 Ottobrunn (DE)
(72) Erfinder: Die Erfindernennung liegt noch nicht vor

(57) **Zusammenfassung**

Lineare Stellantriebsvorrichtung (1) mit einer Antriebseinrichtung (2); mit einer von der Antriebseinrichtung (2) angetriebenen Gewindespindel (3); mit einer auf der Gewindespindel 1 (3) angeordneten und verdrehfest geführten Mutter (4); mit einem auf der Mutter (4) fixierten Stößel (5); und mit einer Axial-Ausgleichsvorrichtung (6), die eine Antriebsnabe (7) aufweist, die auf eine Antriebsausgangswelle (10) der Antriebseinrichtung (2) fixiert ist und eine Gewindeausnehmung (12) für eine Fixierschraube aufweist, mit einer Antriebsnabe (8), die auf der Gewindespindel (3) fixiert ist und eine Gewindeausnehmung (13) für eine Fixierschraube aufweist, und mit einem Axial-Ausgleichsmittelteil (9), das mit der Antriebs- und Abtriebsnabe (7 bzw. 8) in Eingriff steht, wobei die Gewindeausnehmung (12) der Antriebsnabe (7) in einem Gleitteil (14) der Antriebsnabe (7) angeordnet und die Gewirdeausnehmung (13) der Abtriebsnabe (8) in einem Gleitteil (15) der Abtriebsnabe (8) angeordnet ist.

## Beschreibung

Die Erfindung betrifft eine lineare Stellantriebsvorrichtung gemäß dem Oberbegriff des Anspruchs 1.

Aufbauend auf dem traditionellen, klassischen, elektromotorischen Antriebsprinzip und erweitert durch die integrierte Wegmessung und optional durch eine adaptierbare Kraftmessung ist der lineare Kleinstellantrieb, bestehend aus Stellglied und Messeinrichtung, als Basissystem für moderne regelbare Positioniersysteme geeignet. Im einfachsten Fall können mit dem Kleinstellantrieb auf gebräuchliche Art und Weise Werkstücke, Werkzeuge, Anschläge oder Teile in Abhängigkeit von Weg oder Kraft verschoben, verdreht und positioniert werden.

Die gattungsgemäße Stellantriebsvorrichtung leidet aufgrund der konzeptionsgemäß vorgegebenen Länge des Gehäuses an dem Problem, dass ihr Axialausgleich im Zusammenhang mit einer mechanischen Rutschkupplung als Überlastschutz zu lang bauend ist, sodass diese Komponenten nicht in das zuvor genannte Gehäuse eingepasst werden können.

Es ist daher Aufgabe der vorliegenden Erfindung, eine lineare Stellantriebsvorrichtung der im Oberbegriff des Anspruchs 1 angegebenen Art zu schaffen, bei der die Baulänge der im Gehäuse untergebrachten Komponenten minimierbar ist.

Die Lösung dieser Aufgabe erfolgt durch die Merkmale des Anspruchs 1.

Dadurch, dass die Gewindeausnehmung der Antriebsnabe sowie die Gewindeausnehmung der Abtriebsnabe in einem jeweiligen Gleitteil dieser Naben angeordnet ist, ergibt sich eine Minimierung der Baulänge der Axial-Ausgleichsvorrichtung, die allein schon die Integrierung aller Komponenten in die vorgegebenen Gehäuseabmessungen ermöglicht.

Die Unteransprüche haben vorteilhafte Weiterbildungen der Erfindung zum Inhalt.

Eine weitere Minimierung der Baulänge der Komponenten der erfindungsgemäßen Stellantriebsvorrichtung ergibt sich aus dem Vorsehen einer elektronischen Kupplung anstelle der Rutschkupplung der gattungsgemäßen Stellantriebsvorrichtung.

Nachfolgend wird die Stellantriebsvorrichtung der vorliegenden Erfindung mit Bezug auf die anliegende Zeichnung detailliert beschrieben.

Darin zeigt:
- Fig. 1: eine perspektivische Abbildung einer Stellantriebsvorrichtung,
- Fig. 2: ein schematisch stark vereinfachtes Blockschaltbild der erfindungsgemäßen Stellantriebsvorrichtung,
- Fig. 3: eine schematisch stark vereinfachte Schnittansicht der erfindungsgemäßen Stellantriebsvorrichtung,
- Fig. 4: eine perspektivische Abbildung einer Antriebsnabe der erfindungsgemäßen Stellantriebsvorrichtung,
- Fig. 5: eine perspektivische Abbildung einer Abtriebsnabe der erfindungsgemäßen Stellantriebsvorrichtung,
- Fig. 6: eine perspektivische Abbildung eines Axial-Ausgleichsmittelteils der erfindungsgemäßen Stellantriebsvorrichtung, und
- Fig. 7: eine vergrößerte schematisch vereinfachte Schnittansicht einer Wegmesseinrichtung der erfindungsgemäßen Stellantriebsvorrichtung

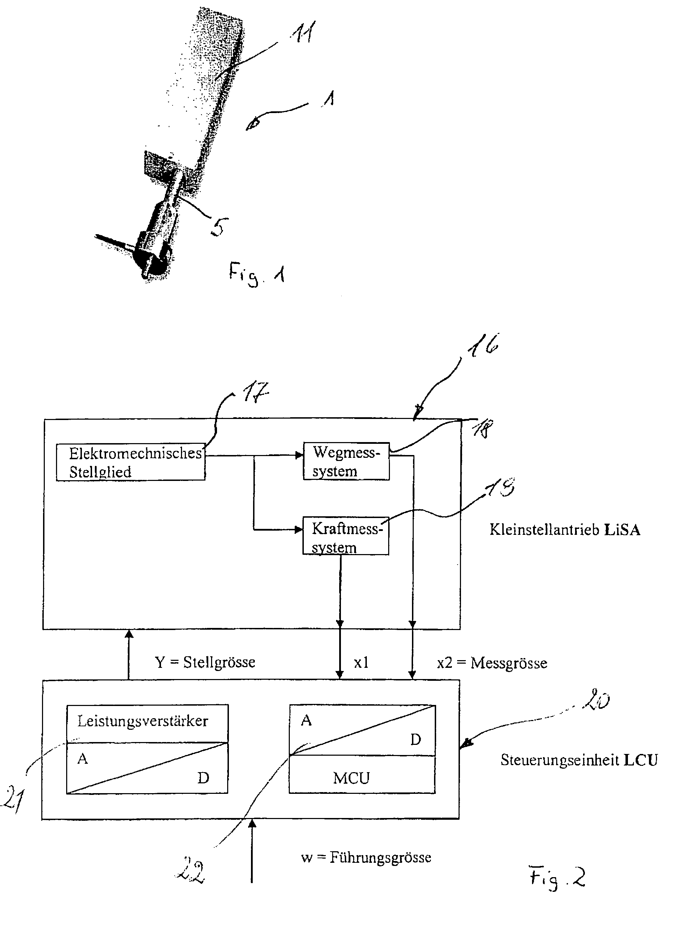

Wie aus der perspektivischen Ansicht von Fig. 1 ersichtlich, sind alle Systemkomponenten einer erfindungsgemäßen Stellantriebsvorrichtung 1 in einem Gehäuse 11 untergebracht, aus dem ein Stößel 5 herausragt, an dem ein beliebiges zu verstellendes Element befestigt werden kann.

Wie aus dem in Fig. 2 dargestellten Blockschaltbild ersichtlich ist, weist die Stellantriebsvorrichtung 1 als wesentliche Baugruppen einen Kleinstellantrieb 16 und eine Steuerungseinheit 20 auf.

Der Kleinstellantrieb 16 umfasst ein elektromechanisches Stellglied 17, ein Wegmesssystem 18 sowie ein Kraftmesssystem 19, deren Messgrößen entsprechend den dargestellten Pfeilen x1, x2 an die Steuerungseinheit 20 ausgegeben werden.

Die Steuerungseinheit 20 umfasst eine SignalVerarbeitungseinheit 22 sowie einen Leistungsverstärker 21, in denen die eingehenden Messgrößen und Führungsgrößen verarbeitet bzw. verstärkt werden und als Stellgröße Y an den Kleinstellantrieb ausgegeben werden.

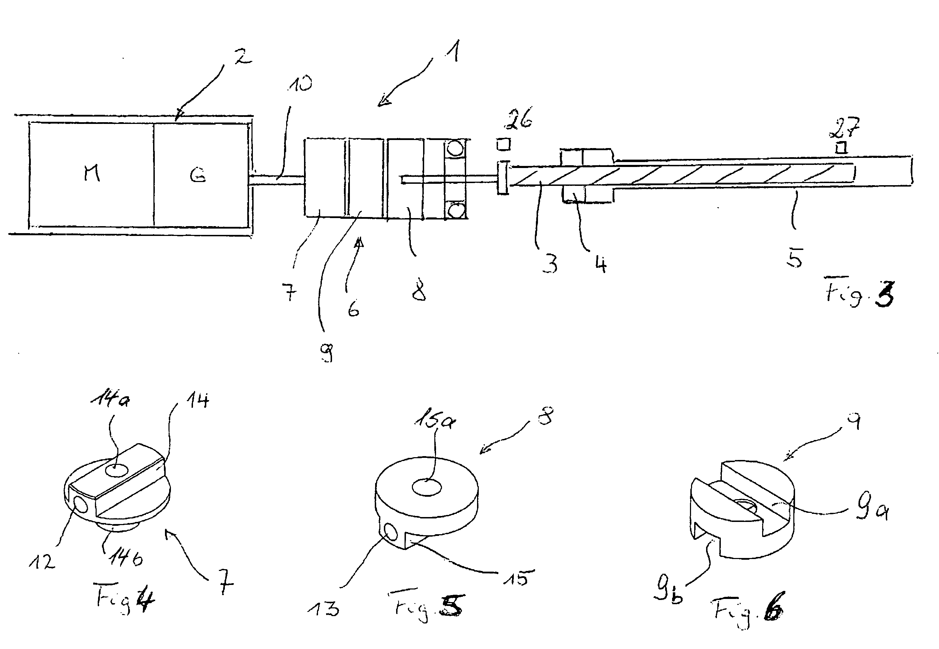

Fig. 3 zeigt eine Schnittansicht der Stellantriebsvorrichtung 1, bei der eine Antriebseinrichtung 2 vorgesehen ist, die im Beispielsfalle als Getriebemotor abgebildet ist. Die Antriebseinrichtung 2 ist über eine Antriebsausgangswelle 10 mit einer Axial-Ausgleichsvorrichtung 6 verbunden. Diese weist eine Antriebsnabe 7, eine Abtriebnabe 8 und ein Axial-Ausgleichsmittelteil 9 auf. Die Abtriebsnabe 8 ist mit einer Gewindespindel 3 verbunden, die eine darauf angeordnete Mutter 4 und einen Stößel 5 aufweist. Zwei Endlagenschalter 26, 27 sind an den entsprechenden Endpunkten des Verfahrweges der Mutter 4 im Innern des in Fig. 3 nicht dargestellten Gehäuses 11 vorgesehen.

Eine nicht näher dargestellte elektronische Kupplung, die schaltungstechnisch zwischen der Stromquelle und dem Motor der Antriebseinheit 2 geschaltet ist, wird bei der vorliegenden Erfindung anstelle einer konventionellen Rutschkupplung eingesetzt. Die elektronische Kupplung misst und überwacht die Stromaufnahme der Motor-/Getriebeeinheit und vergleicht die gemessenen Werte mit einem voreingestellten Schwellenwert. Bei Überschreitung des eingestellten Schwellenwerts wird die Antriebseinheit 2 automatisch abgeschaltet, d. h. stromlos gemacht. Nach Beseitigung der Ursache (z. B. eines mechanischen Widerstandes) wird das System (vorzugsweise automatisch) neu gestartet. Die elektronische Kupplung kann außerhalb oder innerhalb des Gehäuses angeordnet sein.

Fig. 4 zeigt eine perspektivische Ansicht einer Antriebsnabe 7, die auf ihrer Oberseite ein stegförmiges Gleitteil 14 mit einer seitlichen Gewindeausnehmung 12 aufweist, in die eine Fixierschraube (nicht gezeigt) eingedreht werden kann. Die Antriebsnabe 7 weist eine mittige kreisförmige Ausnehmung 14a auf, die durch die ganze Antriebsnabe 7 hindurch verläuft. An einem dem Gleitteil 14 gegenüberliegenden Ende der Antriebsnabe 7 ist ein Absatzbereich 14b ausgebildet, der auf die Antriebsausgangswelle 10 aufgesteckt wird. Die in die Gewindeausnehmung 12 eingeschraubte Fixierschraube (nicht gezeigt) drückt mit ihrem vorderen Ende gegen die Antriebsausgangswelle 10 und befestigt dadurch die Antriebsnabe 7 an dieser.

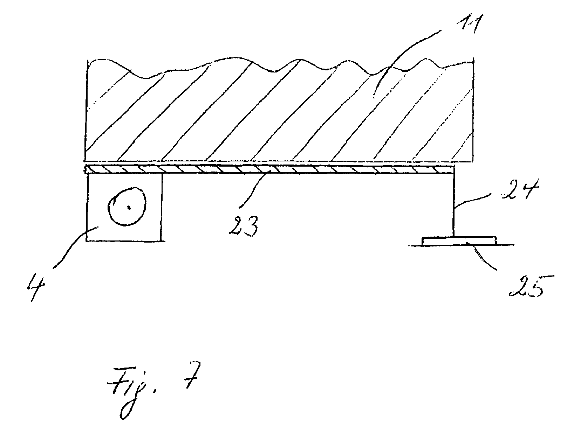

Fig. 5 zeigt eine perspektivische Ansicht einer Abtriebsnabe 8, die auf ihrer Unterseite ein stegförmiges Gleitteil 15 mit einer seitlichen Gewindeausnehmung 13 aufweist, in die eine Fixierschraube (nicht gezeigt) eingedreht werden kann. Die Abtriebsnabe 8 weist eine mittige kreisförmige Ausnehmung 15a auf, die durch die ganze Abtriebsnabe 8 hindurch verläuft. Die Antriebsnabe 8 kann durch Eindrehen der Fixierschraube in die Gewindeausnehmung 13 an der in die Ausnehmung 15a gesteckten Gewindespindel 3 befestigt werden.

Fig. 6 zeigt eine perspektivische Ansicht eines zylindrischen Axial-Ausgleichsmittelteils 9, das zwei um 90 Grad versetzte nutförmige Ausnehmungen 9a, 9b aufweist, die die Gleitteile 14, 15 der in Fig. 4 und 5 gezeigten Antriebsnabe 7 bzw. Antriebsnabe 8 aufnehmen. Auf diese Weise stellt das Axial-Ausgleichsmittelteil 9 eine formschlüssige Verbindung zwischen der auf der Seite der Antriebsausgangswelle 10 angebrachten Antriebsnabe 7 und der auf der Seite der Gewindespindel 3 angebrachten Abtriebsnabe 8, sowie den erforderlichen axialen Ausgleich der Komponenten her.

Fig. 7 zeigt eine stark vergrößerte schematische Schnittansicht einer Wegmesseinrichtung der erfindungsgemäßen Stellantriebsvorrichtung 1. Wie hieraus ersichtlich, ist an einer Seitenfläche der Mutter 4 ein Hebel 23 befestigt, der das beim Betrieb der Antriebseinrichtung auf die Mutter 4 anliegende Drehmoment am Gehäuse 11 abstützt und eine Drehung der Mutter 4 verhindert. Infolge der gemeinsamen Bewegung des Hebels 23 mit der Mutter 4 wird ein am Hebel 23 befestigter Schleifer 24 über eine potentiometrische Piste 25 geführt, wodurch eine wegmessung des Verfahrweges der Mutter 4 erfolgt.

### Bezugszeichenliste

- 1: Stellantriebsvorrichtung
- 2: Antriebseinrichtung
- 3: Gewindespindel
- 4: Mutter
- 5: Stößel
- 6: Axial-Ausgleichsvorrichtung
- 7: Antriebsnabe
- 8: Abtriebsnabe
- 9: Axial-Ausgleichsmittelteil
- 9a, 9b: nutförmige Ausnehmungen
- 10: Antriebsausgangswelle
- 11: Gehäuse
- 12: Gewindeausnehmung der Antriebsnabe
- 13: Gewindeausnehmung der Abtriebsnabe
- 14: Gleitteil der Antriebsnabe
- 14a: mittige Ausnehmung
- 14b: Absatzbereich
- 15: Gleitteil der Abtriebsnabe
- 15a: mittige Ausnehmung
- 16: Kleinstellantrieb
- 17: elektromechanisches Stellglied
- 18: Wegmesssystem
- 19: Kraftmesssystem
- 20: Steuerungseinheit
- 21: Leistungsverstärker
- 22: Signalverarbeitungseinheit
- 23: Hebel
- 24: Schleifer
- 25: Potentiometrische Piste
- 2F: Endlagenschalter

## Patentansprüche

1. Lineare Stellantriebsvorrichtung (1)
- mit einer Antriebseinrichtung (2);
- mit einer von der Antriebseinrichtung (2) angetriebenen Gewindespindel (3);
- mit einer auf der Gewindespindel (3) angeordneten und verdrehfest geführten Mutter (4);
- mit einem auf der Mutter (4) fixierten Stößel (5); und
- mit einer Axial-Ausgleichsvorrichtung (6),
• die eine Antriebsnabe (7) aufweist, die auf eine Antriebsausgangswelle (10) der Antriebseinrichtung (2) fixiert ist und eine Gewindeausnehmung (12) für eine Fixierschraube aufweist,
• mit einer Antriebsnabe (8), die auf der Gewindespindel (3) fixiert ist und eine Gewindeausnehmung (13) für eine Fixierschraube aufweist, und
• mit einem Axial-Ausgleichsmittelteil (9), das mit der Antriebs- und Abtriebsnabe (7 bzw. 8) in Eingriff steht,
**dadurch gekennzeichnet,**
- **dass** die Gewindeausnehmung (12) der Antriebsnabe (7) in einem Gleitteil (14) der Antriebsnabe (7) angeordnet ist; und
- **dass** die Gewindeausnehmung (13) der Abtriebsnabe (8) in einem Gleitteil (15) der Abtriebsnabe (8) angeordnet ist.

2. Lineare Stellantriebsvorrichtung (1) gemäß Anspruch 1, **dadurch gekennzeichnet, dass** eine elektronische Kupplung zwischen Motor und Stromquelle zwischengeschaltet ist.

3. Lineare Stellantriebsvorrichtung (1) gemäß Anspruch 1 oder 2, **dadurch gekennzeichnet, dass** zwei Endlagenschalter (26, 27) an den Endpunkten des Verfahrwegs der Mutter (4) angeordnet sind.

4. Lineare Stellantriebsvorrichtung (1) gemäß einem der Ansprüche 1 bis 3, **dadurch gekennzeichnet, dass** die Gewindespindel (3) über einen Hebel (23) mit einem Schleifer (24) einer potentiometrischen Piste (25) verbunden ist.
